# EUROPEAN PATENT SPECIFICATION

(11) **EP 1 838 168 B1**
(45) Date of publication and mention of the grant of the patent: **07.09.2016**
(21) Application number: 05855951.9
(22) Date of filing: 30.12.2005
(51) Int. Cl.: A23K 50/48, A23K 10/20, A23K 20/163

(54) **PROCESS FOR PREPARING A MEAT AND CARBOHYDRATE BASED COMPOSITION FOR CONSUMPTION BY FELINES**
VERFAHREN ZUR HERSTELLUNG EINER FÜR DEN VERZEHR DURCH KATZEN BESTIMMTEN ZUSAMMENSETZUNG AUF FLEISCH- UND KOHLENHYDRATBASIS
PROCÉDÉ DE PRÉPARATION D'UNE COMPOSITION À BASE DE VIANDE ET D'HYDRATES DE CARBONE DESTINÉE AUX FELINS

(30) Priority: 30.12.2004 US 640565 P
(43) Date of publication of application: 03.10.2007
(73) Proprietor: Hill's Pet Nutrition, Inc., Topeka, KS 66603 (US)
(72) Inventor: DIERKING, Mark, Lee, Topeka, Kansas 66618 (US); CHEUK, Wai, Lun, San Marcos, California 92078 (US); SHAH, Naina, Kiran, Lawrence, Kansas 66047 (US)
(74) Representative: Daniels, Jeffrey Nicholas
(86) International application number: PCT/US2005/047462
(87) International publication number: WO 2006/074090

(56) References cited:
- WO-A2-02/00036
- US-A- 3 965 259
- US-B1- 6 436 463
- US-B2- 6 410 079
- US-B2- 6 692 787

## Description

### CROSS-REFERENCE TO RELATED APPLICATIONS

### BACKGROUND OF THE INVENTION

### Field of the Invention

This invention relates generally to processes for preparing compositions for animal consumption and particularly to processes for preparing meat and carbohydrate based compositions for consumption by felines.

### Description of the Related Art

Companion animals have been fed "dry" and "wet" food compositions for many years. "Wet" food compositions are generally packaged in can-like containers and are considered "wet" in appearance because of the moisture contained therein. Two types of wet compositions are generally known in the art. The first is known in the art as "ground loaf." Loaf products are typically prepared by contacting a mixture of components under heat to produce an essentially homogeneous, intracellular honeycomb-type mass or "ground loaf." The ground loaf mass is then packaged into a cylindrical container, such as a can. Upon packing, ground loaf assumes the shape of the container such that the ground loaf must be cut when serving to a companion animal. As a result of processing, ground loaf products exhibit a wide range of textural differences and loaf products generally do not mix well with other forms of foods, especially dry products.

Another type of wet composition is generally known in the art as "chunk and gravy." Chunk and gravy products comprise a preformed meat particle prepared by making a meat emulsion which is extruded and formed by physical pressure or thermal energy such as cooking with steam, cooking in water, oven dry heat and the like. A product, such as cooked meat, is diced into chunks, which are eventually mixed with a gravy or sauce. The two components are then filled into a container, usually a can, which is seamed and sterilized. As opposed to the ground loaf, chunk and gravy compositions have physically separated, discrete chunks (i.e., pieces of ground meat and grains) as prepared. These discrete particles are present in the gravy-type liquid in the final container. When serving, chunk and gravy products flow out of the can and can be easily mixed with other dry products. While the chunk and gravy products allow better integrity of the individual ingredients, the heterogeneous formulation of the chunk and gravy products are sometimes disfavored by consumers.

U.S. Patent No. 6,436,463 describes a third type of wet composition that is a "hybrid" of the two distinct physical forms of ground loaf and chunk and gravy compositions. This hybrid composition has the appearance of fine ground hamburger or hash with visually recognizable discrete meat particles within an essentially homogeneous mass of the finished product. The reference discusses a process for preparing such hybrid compositions wherein the process includes a first thermal process to preserve the physical and chemical integrity of the meat component and a modified-gravy process which serves to bind the meat and grain components. Although these processes are advantageous over traditional loaf and chunk and gravy processes, there exists a need for more economical and convenient processes for preparing wet food compositions.

WO02/00036 and US6436463 disclose a feline pet food composition comprising a meat based material having an essentially solid mass assuming the shape of the container in which it is packed.

US6692787 discloses a method of making a layered canned pet food.

US6410079 discloses high meat pet food compositions.

### SUMMARY OF THE INVENTION

This invention provides processes for preparing compositions for feline consumption comprising a meat-based material having an essentially solid mass that assumes the shape of the container in which it is packed. The composition is further characterized as having visually recognizable discrete meat particles with a moisturized appearance upon slicing after removing the mass from the container.

Briefly, therefore, the invention provides a process for preparing a meat and carbohydrate based composition for consumption by a feline. The process comprises preparing a meat mixture comprising one or more meat sources; preparing a grain mixture comprising one or more grains; heating a mixture of water and one or more thickening agents to prepare a hot slurry; and contacting the meat mixture, the carbohydrate mixture and the hot slurry for a time and at a temperature sufficient to prepare an essentially homogeneous mass.

In another embodiment, the invention provides a process for preparing a meat and carbohydrate based feline pet food composition having an essentially homogeneous mass substantially conforming to the shape of its container. The process comprises contacting a meat component, a grain component and a heated gravy component for a time and at a temperature sufficient to prepare an essentially homogeneous mass, wherein the temperature of the meat component and the gravy component is less than about 40°C prior to contacting the heated gravy.

Other and further objects, features, and advantages of the present invention will be readily apparent to those skilled in the art.

### DETAILED DESCRIPTION OF THE INVENTION

### Definitions

Unless otherwise specified, the term "by weight" refers to weight percentage of the total composition calculated on a dry weight basis.

As used herein, the term "food" may refer not only to a food product which typically provides most, if not all, the nutrient value for a companion animal, but may also refer to such items as a snack, treat, supplement, and the like.

Unless defined otherwise, all technical and scientific terms and any acronyms used herein have the same meanings as commonly understood by one of ordinary skill in the art in the field of the invention. Although any methods and materials similar or equivalent to those described herein can be used in the practice of the present invention, the preferred methods, devices, and materials are described herein.

### The Invention

The invention provides a process for preparing a meat and carbohydrate based composition for consumption by a feline comprising preparing a meat mixture comprising one or more meat sources, preparing a grain mixture comprising one or more grain, heating a mixture of water and one or more thickening agents to prepare a hot slurry, and contacting the meat mixture, the carbohydrate mixture, and the hot slurry for a time and at a temperature sufficient to prepare an essentially homogeneous mass. The process results in feline wet compositions comprising a meat-based material having an essentially solid mass. Also, the composition assumes the shape of the container in which it is packed. Such compositions typically have visually recognizable discrete meat particles with a moisturized appearance upon slicing the solid mass after departure from the container.

The wet compositions for feline consumption can be prepared by contacting a meat component and a grain component with a heated gravy for a time and at a temperature sufficient to prepare an essentially homogeneous mass. The process of the present invention is advantageous over known processes for preparing wet compositions that typically require each of the meat and grain components to be heated before mixing. Without being held to a particular theory, it is believed that sufficient heat for preparing a composition having an essentially homogeneous mass can be provided by the hot gravy component without separately heating the meat or grain components before mixing. As such, the present invention provides a process which is easier to operate and control and that results in lower operating costs and requires less capital equipment.

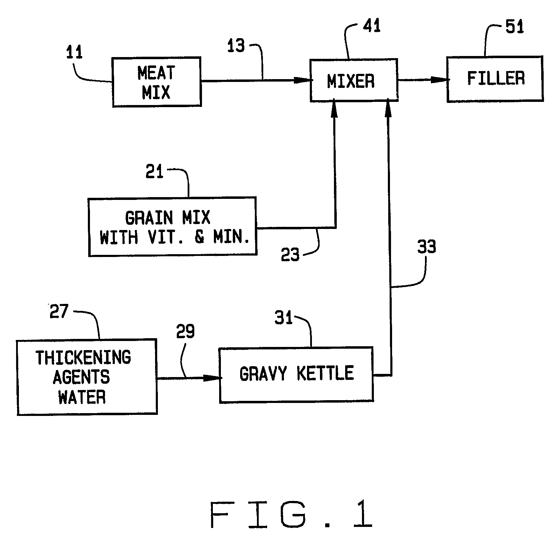

Referring to Figure 1, the process of the present invention is more fully described. The process comprises preparing a meat mixture or a meat component in a mixer 11. The meat mixture is transferred through line 13 to a second mixer 41. A grain mixture comprising one or more grains (i.e., a grain component) is prepared in a mixer 21 and transferred through line 23 to second mixer 41. A heated gravy is prepared separately from the meat mixture and the carbohydrate mixture by contacting water and one or more thickening agents under heat in a gravy kettle 31. The heated gravy is then transferred through line 33 to second mixer 41. The meat mixture, grain mixture and heated gravy are all mixed together in second mixer 41 for a time and at a temperature sufficient to result in an essentially homogeneous mass. Additional heat can be added to maintain the prevailing temperature in the second mixer, if desired, but it is generally not necessary. The essentially homogeneous mass produced in second mixer 41 is then further processed for partitioning into containers, for example, using a filler 51. In this manner, the compositions of the present invention are readily prepared.

The meat mixture can be prepared from a wide variety of meats or meat sources including, for example, meat sources selected from the group consisting of animal muscle, animal skeletal meat, animal by-products, and mixtures of muscle, skeletal meat and by-products. Meats include, for example, the flesh of poultry; fish; and mammals (e.g., cattle, swine, sheep, goats, and the like). Meat by-products include, for example, lungs, kidneys, livers, tongues, stomachs and intestines. Suitable meat sources may include fresh and frozen meats or meat by-products. The meat mixture is generally prepared by grinding the meat through different grind-plates, typically ranging from about 1/2 inch (1.27 cm) to about 1 inch (2.54 cm) in size, to form the discrete food particles required for the finished product.

The prepared meat mixture or meat component for inclusion in the composition generally comprises at least about 15% by weight protein and about 25% by weight fat. For example, in one embodiment, the meat mixture comprises one or more animal protein sources such that the mixture comprises from about 15% to about 25% protein, from about 5% to about 15% by weight fat, and from about 55% to about 75% by weight water.

The meat mixture may be prepared in any suitable mixing apparatus known to one skilled in the art. Non-limiting examples of suitable apparatus for preparing the meat component include a twin screw mixer, a twin ribbon mixer, an overlapping paddle mixer, or a combination mixer such as a screw/ribbon/paddle.

The grain component comprises a mixture of one or more grains. Suitable grains include, for example, grains selected from the group consisting of oat fiber, cellulose, peanut hull, beet pulp, parboiled rice, corn starch, corn gluten meal and mixtures thereof. It is important to note that by properly balancing carbohydrate sources, one skilled in the art can manipulate the texture of the final product. For example, short chain polysaccharides tend to be sticky and gluey and longer chain polysaccharides are less sticky and gluey than the shorter chain. Basically the desired texture of this hybrid composition is achieved by longer chain polysaccharide and modified starches such as native or modified starches, cellulose and the like.

The grain mixture may additionally comprise optional components such as added salt, spices, seasonings, vitamins, minerals, flavorants, colorants, and the like. The amount of the optional additives is at least partially dependent on the nutritional requirements for different life stages of animals. For example, the National Research Council (NRC) provides recommended amounts of such ingredients for farm animals. See, e.g., Nutrient Requirements of Swine (10th Rev. Ed., Nat'l Academy Press, Wash. D.C., 1998), Nutrient Requirements of Poultry (9th Rev. Ed., Nat'l Academy Press, Wash. D.C., 1994), Nutrient Requirements of Horses (5th Rev. Ed., Nat'l Academy Press, Wash. D.C., 1989), etc. and the American Feed Control Officials (AAFCO), for example, provides recommended amounts of such ingredients for dogs and cats. See American Feed Control Officials, Incorp., Official publication, pp. 126-140 (2003). Vitamins generally useful as food additives include, for example, vitamin A, vitamin B1, vitamin B2, vitamin B6, vitamin B12, vitamin C, vitamin D, vitamin E, vitamin H (biotin), vitamin K, folic acid, inositol, niacin, and pantothenic acid. Minerals and trace elements generally useful as food additives include, for example, calcium, phosphorus, sodium, potassium, magnesium, copper, zinc, choline, and iron salts.

The gravy component is prepared by contacting one or more thickening agents with water at a temperature of from about 65° to about 85°C (or from about 70° to about 75°C). Thickening agents for use in the gravy component may include gums such as guar gum(s), native starch and various modified starches such as dextrin prepared from dry starch treated with heat and acid, oxidation of native starch with hypochlorite to obtain an oxidized starch which can inhibit gelling, an acid or enzyme hydrolyzed polysaccharide which can delay pasting and gelling, a crosslinked starch and a substituted starch with, for example, propylene oxide or acetic anhydride which can provide freeze thaw stability and a peak viscosity as well as a high fructose corn syrup, carbohydrates, glucose and sucrose. Therefore, a multitude of desirable results such as shelf life stability, process control, textural and mouth feel, heat acid stability, shear stability, and freeze thaw stability can be achieved through proper selection of the modification.

Heating of the gravy mixture may be effected using any suitable manner known to skilled artisans, e.g., by direct steam injection or by using a vessel fitted with a heat exchanger.

The gravy component generally comprises materials selected to provide a suitable viscosity when the meat component, grain component and gravy component are mixed together. The pre-processing viscosity is important to provide the essentially homogeneous mass and to prevent component separation when the composition is partitioned into containers (i.e., during filling). Thus it is important that the three components remain homogeneous at the filling stage.

The meat component, the grain component and the hot gravy are mixed at temperature for a time sufficient to achieve or essentially achieve hydration and gelatinization of carbohydrates so as to improve the finished product texture. As described above, the process of the present invention does not require heating of the meat component or the grain component prior to contacting the heated gravy. Thus, the meat component and the grain component are typically prepared at a temperature less than about 25°C or less than about 10°C. For example, in one embodiment, the meat component comprises a meat slurry that has a temperature of from about 0°C to about 5°C before being contacted with the heated gravy component.

The invention also provides the products of the processes of the present invention.

Although not essential to the invention, the compositions prepared by the process of the present invention generally comprise:

| Component | |
|---|---|
| Meat | from about 40% by weight to about 80% by weight (or from about 45% by weight to about 75% by weight) |
| Grains | from about 2% by weight to about 15% by weight (or from about 8% by weight to about 12% by weight) |
| Vitamins, Minerals, Colorant, Flavor | from about 0% by weight to about 5% by weight (or from about 1% by weight to about 3% by weight) |
| Gravy | from about 20% by weight to about 40% by weight (or from about 25% by weight to about 35% by weight) |

In a particular embodiment, the composition may be a "high meat" composition for feline consumption. Such high meat compositions generally comprise at least about 65% by weight meat and less than about 10% by weight grains.

The meat component, grain component and heated gravy component are contacted in any suitable mixer. Examples of suitable mixing apparatus include a twin screw mixer, a twin ribbon mixer, or an overlapping paddle mixer. The mixing should be vigorous enough to ensure that the individual components are formed into a single entity for further processing and partitioning into containers. The temperature during mixing of the meat component, grain component and heated gravy is from about 25° to about 45°C to achieve or essentially achieve hydration and gelatinization of grain/carbohydrate for certain desired texture of composition. Additional heat may be provided, however, such is not necessary.

The final mixture is filled into cans which are then sealed and sterilized. In this case, the product produced a solid mass with recognizable discrete meat particles with a moisturized appearance. Additional water may also be added to the mixture until an essentially uniform, colloidal mass is produced having the desired texture. The final product is then placed in containers, seamed, and retorted for sterility.

### EXAMPLES

### Example 1

This example demonstrates the preparation of a composition for feline consumption using the process of the present invention.

A meat mixture comprising skeletal muscle from cattle or hog and its meat by products was prepared by mixing the meat sources in a ribbon/paddle mixer. The meat mixture comprised 77.00% moisture, 15.32% protein, and 6.20% fat.

A grain mixture comprising parboiled rice and cellulose was prepared in a separate mixer by contacting the grains with vitamins, minerals, colorant and flavor.

A hot gravy was then prepared by mixing together modified corn starch (1.8% by weight of the gravy) and guar gum (1.2% by weight of the gravy) with water/steam making up the remainder. The gravy mixture was then heated to a temperature of from about 87°C (190°F) to about 93°C (200°F) until the mixture developed a target viscosity of about 22 cm / 30 seconds at 82°C (180°F) as measured on a Botswick Consistometer.

The meat mixture, grain mixture, and gravy as prepared above were combined in a regular mixer and evenly blended without further heating. The blending ratio of meat mixture, grain mixture and gravy was 60:10:30 wt %, respectively. The resultant product after sterilization had a hearty ground texture appearance with visually recognizable meat particles which neither resemble ground loaf nor chunk and gravy products. The composition of the final product is shown in Table 1.

**Table 1**

| Component | % by weight of composition |
|---|---|
| Meat | 60 |
| Grain | 8 |
| Vitamins, Minerals, Color and Flavor | 2 |
| Gravy | 30 |
| Protein | 15.32 |
| Fat | 6.20 |

### Example 2

This example demonstrates the preparation of a carbohydrate composition for feline consumption using the process of the present invention.

A meat mix comprising skeletal muscle from fish or chicken and meat by products was prepared by mixing the meat sources in a ribbon/paddle mixer. The resultant meat mixture comprised 64.5% moisture, 16% protein, and 17.53% fat.

A grain mixture comprising parboiled rice, yellow ground corn and oat fiber was prepared in a separate mixture by contacting the grains with vitamins, minerals, colorant and flavor.

A hot gravy was then prepared by mixing together modified corn starch (1.8% by weight of the gravy) and guar gum (0.6% by weight of the gravy) with water/steam making up the remainder. The gravy was then heated to a temperature of from about 87°C (190°F) to about 93°C (200°F) until the mixture developed a target viscosity of about 20 cm / 30 seconds at 82°C (180°F) as measured on a Botswick Consistometer.

The meat mixture, grain mixture and gravy as prepared above were combined in a regular mixer and evenly blended without further heating. The blending ratio of the meat mixture, grain mixture and gravy was 55:11.5:33.5 wt %, respectively. The resultant product after sterilization had a hearty ground texture appearance with visually recognizable meat particles which neither resemble ground loaf nor chunk and gravy products. The composition of the final product is shown in Table 2.

**Table 2**

| Component | % by weight of composition |
|---|---|
| Meat | 55 |
| Grain | 10 |
| Vitamins, Minerals, Color and Flavor | 1.5 |
| Gravy | 33.5 |
| Protein | 16 |
| Fat | 17.53 |

### Example 3

This example demonstrates the preparation of a high meat composition for feline consumption using the process of the present invention.

A meat mix comprising skeletal muscle from fish or chicken and meat by products was prepared by mixing the meat sources in a ribbon/paddle mixer.

A grain mixture was prepared in a separate mixture by contacting the grains with vitamins, minerals, colorant and flavor.

A hot gravy was then prepared by mixing together modified corn starch and guar gum with water/steam making up the remainder. The gravy was then heated to a temperature of from about 87°C (190°F) to about 93°C (200°F) until the mixture developed a target viscosity of about 20 cm / 30 seconds at 82°C (180°F) as measured on a Botswick Consistometer.

The meat mixture, grain mixture and gravy as prepared above were combined in a regular mixer and evenly blended without further heating. The blending ratio of meat mixture, grain mixture and gravy was 75:2.5:18 wt %, respectively. The resultant product after sterilization had a hearty ground texture appearance with visually recognizable meat particles which neither resemble ground loaf nor chunk and gravy products. The composition of the final product is shown in Table 3.

**Table 3**

| Component | % by weight of composition |
|---|---|
| Meat | 75 |
| Grain | 2.5 |
| Gravy | 18 |
| Protein | 13 |
| Fat | 8.5 |

In the specification, there have been disclosed typical preferred embodiments of the invention and, although specific terms are employed, they are used in a generic and descriptive sense only and not for purposes of limitation, the scope of the invention being set forth in the following claims.

## Claims

1. A process for preparing a meat and carbohydrate based composition for consumption by a feline comprising:
preparing a meat mixture comprising one or more meat sources;
preparing a grain mixture comprising one or more grains;
heating a mixture of water and one or more thickening agents to a temperature of from about 65° to about 85°C to prepare a hot slurry; and
contacting the meat mixture, the grain mixture, and the hot slurry without additional heat,
wherein the meat mixture is prepared at a temperature of less than about 25°C,
and wherein the meat and carbohydrate based composition formed on contacting the meat mixture, the grain mixture and the hot slurry is an essentially homogenous mass.

2. The process of claim 1 wherein the grain mixture is prepared at a temperature of less than about 40°C.

3. The process of claim 1 wherein the mixture of water and thickening agent is heated to a temperature of from about 70° to about 75°C.

4. The process of any preceding claim wherein the meat mixture, the carbohydrate mixture, and the hot slurry are contacted at a temperature of from about 25° to about 45°C.

5. The process of any preceding claim wherein the meat mixture comprises one or more meat sources selected from the group consisting of animal muscle, animal skeletal meat, animal by products, and mixtures of muscle, skeletal meat and by-products.

6. The process of claim 5 wherein the meat mixture is prepared by grinding one or more meats.

7. The process of any preceding claim wherein the grain mixture comprises one or more grains selected from the group consisting of oat fiber, cellulose, peanut hull, beet pulp, parboiled rice, cornstarch, corn gluten meal, and mixtures thereof.

8. The process of any preceding claim wherein the water is contacted with one or more thickening agents selected from the group consisting of corn starch, guar gum, glucose, sucrose, high fructose corn syrup, or mixtures thereof.

9. The process of any preceding claim, wherein the essentially homogeneous mass substantially conforms to the shape of its container.

10. The process of any preceding claim wherein the process further comprises partitioning the essentially homogeneous mass into one or more containers.

## Patentansprüche

1. Verfahren zur Herstellung einer Zusammensetzung auf Fleisch- und Kohlenhydratbasis zum Verzehr durch eine Katze, das Folgendes umfasst:
Herstellen einer Fleischmischung, die eine oder mehrere Fleischquellen umfasst;
Herstellen einer Körnermischung, die ein oder mehrere Körner umfasst;
Erhitzen einer Mischung von Wasser und einem oder mehreren Verdickungsmitteln auf eine Temperatur von etwa 65 °C bis etwa 85 °C, um eine heiße Aufschlämmung herzustellen; und
Inkontaktbringen der Fleischmischung, der Körnermischung und der heißen Aufschlämmung ohne zusätzliche Wärme,
wobei die Fleischmischung bei einer Temperatur von weniger als etwa 25 °C hergestellt wird
und wobei die Zusammensetzung auf Fleisch- und Kohlenhydratbasis, die bei Inkontaktbringen der Fleischmischung, der Körnermischung und der heißen Aufschlämmung gebildet wird, eine im Wesentlichen homogene Masse ist.

2. Verfahren nach Anspruch 1, wobei die Körnermischung bei einer Temperatur von weniger als etwa 40 °C hergestellt wird.

3. Verfahren nach Anspruch 1, wobei die Mischung von Wasser und Verdickungsmittel auf eine Temperatur von etwa 70 °C bis etwa 75 °C erhitzt wird.

4. Verfahren nach einem vorhergehenden Anspruch, wobei die Fleischmischung, die Kohlenhydratmischung und die heiße Aufschlämmung bei einer Temperatur von etwa 25 °C bis etwa 45 °C in Kontakt gebracht werden.

5. Verfahren nach einem vorhergehenden Anspruch, wobei die Fleischmischung eine oder mehrere Fleischquellen umfasst, die aus der Gruppe bestehend aus Tiermuskel, Tierknochenfleisch, Tiernebenprodukten und Mischungen von Muskel, Knochenfleisch und Nebenprodukten ausgewählt sind.

6. Verfahren nach Anspruch 5, wobei die Fleischmischung durch Mahlen eines oder mehrerer Fleischsorten hergestellt wird.

7. Verfahren nach einem vorhergehenden Anspruch, wobei die Körnermischung ein oder mehrere Körner umfasst, die aus der Gruppe bestehend aus Haferfaser, Cellulose, Erdnusshaut, Rübenschnitzeln, Parboiled-Reis, Maisstärke, Maisglutenmehl und Mischungen davon ausgewählt sind.

8. Verfahren nach einem vorhergehenden Anspruch, wobei das Wasser mit einem oder mehreren Verdickungsmitteln in Kontakt gebracht wird, die aus der Gruppe bestehend aus Maisstärke, Guargummi, Glukose, Saccharose, Maissirup mit hohem Fruchtzuckergehalt oder Mischungen davon ausgewählt sind.

9. Verfahren nach einem vorhergehenden Anspruch, wobei die im Wesentlichen homogene Masse im Wesentlichen der Form ihres Behälters entspricht.

10. Verfahren nach einem vorhergehenden Anspruch, wobei das Verfahren weiterhin das Aufteilen der im Wesentlichen homogenen Masse in einen oder mehrere Behälter umfasst.

## Revendications

1. Un procédé de préparation d'une composition à base de viande et d'hydrate de carbone destinée à être consommée par un félin, consistant à :
préparer un mélange de viandes comprenant une ou plusieurs sources de viande ;
préparer un mélange de céréales comprenant une ou plusieurs céréales ;
faire chauffer un mélange d'eau et d'un ou de plusieurs agents épaississants à une température comprise entre environ 65°C et environ 85°C pour préparer une suspension chaude ; et
mettre en contact le mélange de viandes, le mélange de céréales et la suspension chaude sans chaleur supplémentaire,
dans lequel le mélange de viandes est préparé à une température inférieure à environ 25°C, et
dans lequel la composition à base de viande et d'hydrate de carbone formée par la mise en contact du mélange de viandes, du mélange de céréales et de la suspension chaude est une masse essentiellement homogène.

2. Le procédé selon la revendication 1 dans lequel le mélange de céréales est préparé à une température inférieure à environ 40°C.

3. Le procédé selon la revendication 1 dans lequel le mélange d'eau et d'agent épaississant est porté à une température comprise entre environ 70°C et environ 75°C.

4. Le procédé selon l'une quelconque des revendications précédentes dans lequel le mélange de viandes, le mélange d'hydrates de carbone et la suspension chaude sont mis en contact à une température comprise entre environ 25°C et environ 45°C.

5. Le procédé selon l'une quelconque des revendications précédentes dans lequel le mélange de viandes comprend une ou plusieurs sources de viandes sélectionnées dans le groupe constitué par le tissu musculaire animal, le tissu musculaire squelettique animal, les sous-produits animaux, et des mélanges de tissu musculaire, de tissu musculaire squelettique et de sous-produits.

6. Le procédé selon la revendication 5 dans lequel le mélange de viandes est préparé en broyant une ou plusieurs viandes.

7. Le procédé selon l'une quelconque des revendications précédentes dans lequel le mélange de céréales comprend une ou plusieurs céréales sélectionnées dans le groupe constitué par la fibre d'avoine, la cellulose, l'écorce de cacahouète, la pulpe de betterave, le riz partiellement cuit, l'amidon de maïs, la farine de gluten de maïs, et des mélanges de ces derniers.

8. Le procédé selon l'une quelconque des revendications précédentes dans lequel de l'eau est mise en contact avec un ou plusieurs agents épaississants sélectionnés dans le groupe constitué par l'amidon de maïs, la gomme de guar, le glucose, le sucrose, le sirop de maïs à haute teneur en fructose, ou des mélanges de ces derniers.

9. Le procédé selon l'une quelconque des revendications précédentes, dans lequel la masse essentiellement homogène s'adapte sensiblement à la forme de son contenant.

10. Le procédé selon l'une quelconque des revendications précédentes dans lequel le processus comprend en outre le partitionnement de la masse essentiellement homogène dans un ou plusieurs contenants.
